# EUROPÄISCHE PATENTSCHRIFT

(11) **EP 1 161 978 B1**
(45) Veröffentlichungstag und Bekanntmachung des Hinweises auf die Patenterteilung: **29.12.2004**
(21) Anmeldenummer: 01108988.5
(22) Anmeldetag: 11.04.2001
(51) Int. Cl.: B01D 46/52, B01D 46/10

(54) **Filteranordnung**
Filter arrangement
Dispositif de filtration

(30) Priorität: 09.06.2000 DE 20010383 U
(43) Veröffentlichungstag der Anmeldung: 12.12.2001
(73) Patentinhaber: Irema-Filter GmbH, 92353 Postbauer-Pavelsbach (DE)
(72) Erfinder: Jung, Reinhard, 92353 Postbauer-Heng (DE)
(74) Vertreter: Schneck, Herbert, Dipl.-Phys., Dr.

(56) Entgegenhaltungen:
- GB-A- 2 264 072
- US-A- 5 509 950
- US-A- 5 902 361

## Beschreibung

Die Erfindung betrifft eine Filteranordnung für in Gebäuden umgewälzte Luft, insbesondere in Verbindung mit Klimaanlagen, umfassend ein plissiertes Filtermaterial und einen dieses aufnehmenden Rahmen, wobei das Filtermaterial und der Rahmen aus Polypropylen bestehen, wobei vorgesehen ist, daß das Filtermaterial ein Endlosfaser-Polypropylen-Vlies ist.

In derartigen Filteranordnungen für Gebäude wird herkömmlicherweise Glasfilterpapier eingesetzt, bei welchem das Problem besteht, daß sich unter dem Einfluß der durchströmenden Luft Fasern ablösen können, wobei in der Forschung teilweise die Auffassung vertreten wird, daß solche Fasern jedenfalls in größeren Konzentrationen cancerogen wirken können.

Die Rahmen bekannter derartiger Filter bestehen entweder aus Pappe und sind dann nicht feuchtigkeitsbeständig und oft von Haus aus nicht hinreichend stabil. Alternativ bestehen sie aus Metall, so daß sie vergleichsweise kostenaufwendig sind, insbesondere stellt sich dann aber die Entsorgung problematisch dar. Weiterhin sind solche Rahmen rostanfällig.

Aus der US 5,902,361 A ist eine gattungsgemäße Filteranordnung bekannt, bei der sowohl das Filtermaterial als auch der Rahmen aus Polypropylen bestehen. Das Filtermaterial ist aus Mikrofasern gebildet, die miteinander verklebt bzw. verschweißt sind. Der Rahmen ist so ausgestaltet, dass er zumindest teilweise das Filtermaterial umgibt.

Die US 5,509,950 A beschreibt ebenfalls eine Filteranordnung, die ein aus Polypropylen bestehendes Filtermaterial und einen Rahmen aus Polypropylen umfasst. Das Filtermaterial ist aus Splitt-Fasern gebildet, die miteinander verbunden sind. Das Filtermaterial ist seitlich durch Platten begrenzt und wird in eine einseitig offene Aufnahme eingesetzt.

Hiervon ausgehend liegt der Erfindung die Aufgabe zugrunde, eine solche Anordnung so auszugestalten, daß einerseits gute Filtereigenschaften reicht werden und andererseits eine hohe Eigensteifigkeit gewährleistet ist.

Diese Aufgabe wird erfindungsgemäß dadurch gelöst, daß das Filtermaterial aus einem Endlosfaser-Polypropylen-Vlies besteht.

Während herkömmliches Filtermaterial flauschig, dick und weich und deshalb nicht ohne Trägermaterial plissierfähig ist, ist das erfindungsgemäße Material deutlich kompakter und verfügt über eine derart hohe Eigensteifigkeit, dass die Verwendung eines Trägermaterials überflüssig wird. Die Kompaktheit dieses Materials ermöglicht es, die Filteroberfläche bei gleicher Filtergröße um den Faktor 5 zu erhöhen.

Durch ein solches Endlosfaser-Polypropylen-Vlies wird die Ablösung von Fasern zuverlässig verhindert. Die Verwendung eines Rahmens aus dem gleichen Material, nämlich Polypropylen, macht die Entsorgung besonders einfach, da ein sortenreines Produkt zur Verfügung steht, welches entweder problemlos recycelt werden oder einfach verbrannt werden kann.

Auch die Abstandshalter für das passierte Filtermaterial sind aus Polypropylen.

Der Rahmen ist vorzugsweise so ausgestattet, daß er das Filtermaterial U-förmig übergreift und mit diesem mittels eines Polypropylen-Klebers verklebt ist.

Die einzelnen Abschnitte des Rahmens sind also vorzugsweise U-förmig gefaltete Polypropylen-Profile, die erst in Verbindung mit dem plissierten, schon weitgehend eigenstabilen Polypropylen-Filter einen vollständigen, umlaufenden Rahmen ausbilden.

Zur Erhöhung der Stabilität sind im Eckbereich die Schenkel der Rahmenprofilleisten überlappend ausgebildet und miteinander verklebt.

Nachfolgend wird die Erfindung anhand eines bevorzugten Ausführungsbeispiels in Verbindung mit der Zeichnung näher erläutert. Dabei zeigen:

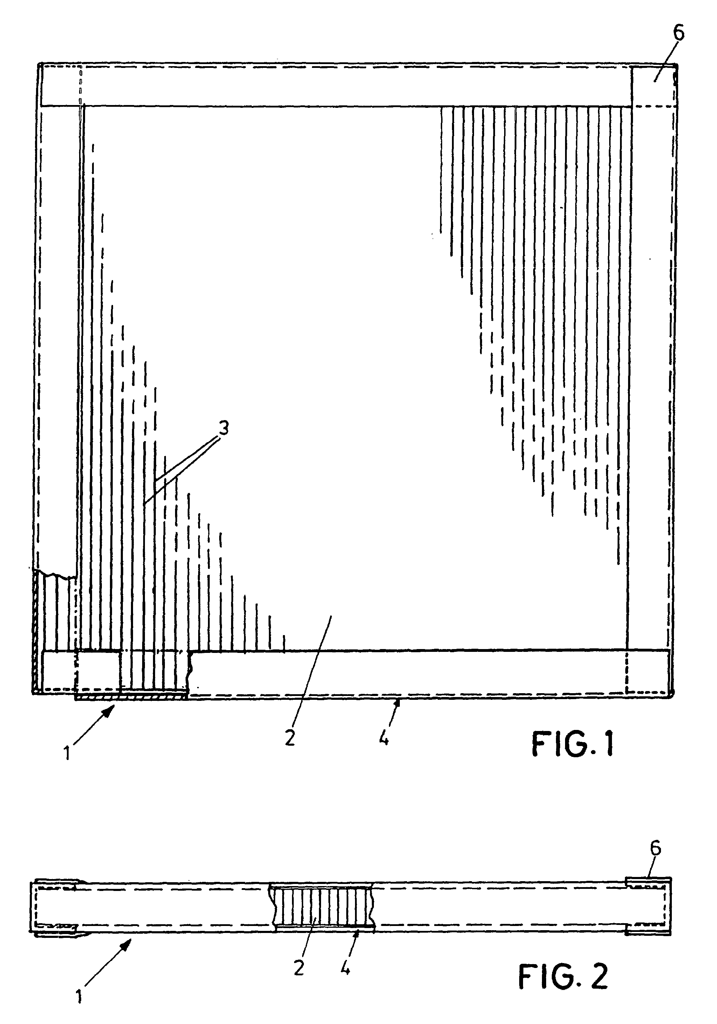

- Fig. 1: eine Aufsicht auf eine erfindungsgemäße Filteranordnung, teilweise aufgebrochen und
- Fig. 2: eine Seitenansicht der Filteranordnung nach Fig. 1, ebenfalls teilweise aufgebrochen.

Eine in der Zeichnung dargestellte erfindungsgemäße Filteranordnung 1 umfaßt ein plissiertes Filtermaterial 2 aus einem Endlosfaser-Polypropylen-Vlies, d.h. das flächige Filtermaterial 2 ist in ziehharmonikaartige Falten 3 gelegt, welche durch in der Zeichnung nicht dargestellte Abstandshalter stabilisiert werden.

Das plissierte Filtermaterial 2 ist von einem Rahmen 4 umgeben, der im Ausführungsbeispiel gebildet ist durch vier einzelne im Querschnitt U-förmige Polypropylen-Profile 5.

Diese Polypropylen-Profile 5 sind so angeordnet, daß sie sich im Eckbereich 6 überlappen, wo sie mit Hilfe eines Polypropylen-Klebers miteinander verklebt sind, so daß ein insgesamt stabiler Rahmen 4 ausgebildet wird.

## Patentansprüche

1. Filteranordnung für in Gebäuden umgewälzte Luft, insbesondere in Verbindung mit Klimaanlagen, umfassend ein plissiertes Filtermaterial und einen dieses aufnehmenden Rahmen, wobei das Filtermaterial und der Rahmen aus Polypropylen bestehen, **dadurch gekennzeichet, daß** das Filtermaterial ein Endlosfaser-Polypropylen-Vlies ist.

2. Filteranordnung nach Anspruch 1, **dadurch gekennzeichnet, daß** Abstandshalter aus Polypropylen an dem Filtermaterial (2) angeordnet sind.

3. Filteranordnung nach Anspruch 1, **dadurch gekennzeichnet, daß** der Rahmen (4) das Filtermaterial (2) U-förmig umgreift und mit diesem mittels eines Polypropylen-Klebers verbunden ist.

4. Filteranordnung nach Anspruch 3, **dadurch gekennzeichnet, daß** der Rahmen (4) aus geraden, U-förmigen Polypropylen-Profilen (5) zusammengesetzt ist.

5. Filteranordnung nach Anspruch 4, **dadurch gekennzeichnet, daß** die Polypropylen-Profile (5) sich im Eckbereich (6) überlappen und miteinander verklebt sind.

## Claims

1. A filter arrangement for air which is recirculated in buildings, in particular in combination with air conditioners, comprising pleated filter material and a frame holding the filter material, the filter material and the frame consisting in particular of polypropylene, **characterized in that** the filter material is continuous-fiber polypropylene non-woven.

2. A filter arrangement according to claim 1, **characterized in that** spacers of polypropylene are disposed on the filter material (2).

3. A filter arrangement according to claim 1, **characterized in that** the frame (4) encompasses the filter material (2) in the shape of a U and is joined thereto by polypropylene adhesive.

4. A filter arrangement according to claim 3, **characterized in that** the frame (4) is composed of straight, U-shaped polypropylene sections (5).

5. A filter arrangement according to claim 4, **characterized in that** the polypropylene sections (5) overlap at the comer (6) and are glued to each other.

## Revendications

1. Agencement de filtration pour de l'air recyclé dans des bâtiments, en particulier en relation avec des systèmes d'air conditionné, comprenant un matériau filtrant plissé et un cadre recevant celui-ci, le matériau filtrant et le cadre étant composés de polypropylène, **caractérisé en ce que** le matériau filtrant est un voile de fibre continue en polypropylène.

2. Agencement de filtration selon la revendication 1, **caractérisé en ce que** des pièces d'écartement en polypropylène sont disposées au niveau du matériau filtrant (2).

3. Agencement de filtration selon la revendication 1, **caractérisé en ce que** le cadre (4) a une prise autour du matériau filtrant (2) en forme de U et est assemblé avec ce dernier au moyen d'une colle polypropylène.

4. Agencement de filtration selon la revendication 3, **caractérisé en ce que** le cadre (4) est composé de profilés en polypropylène (5) droits en forme de U.

5. Agencement de filtration selon la revendication 4, **caractérisé en ce que** les profilés en polypropylène (5) se chevauchent au niveau des coins (6) et sont collés ensemble.
